# EUROPEAN PATENT SPECIFICATION

(11) **EP 3 966 531 B1**
(45) Date of publication and mention of the grant of the patent: **22.07.2026**
(21) Application number: 20802068.5
(22) Date of filing: 08.05.2020
(51) Int. Cl.: G01D 18/00, G06F 21/62, G06F 21/64, H04L 9/06, H04L 9/32, G09C 1/00, H04L 9/00

(54) **CERTIFICATION OF A MEASUREMENT RESULT OF A MEASURING DEVICE**
ZERTIFIZIERUNG EINES MESSERGEBNISSES EINER MESSVORRICHTUNG
CERTIFICATION D'UN RÉSULTAT DE MESURE D'UN DISPOSITIF DE MESURE

(30) Priority: 09.05.2019 FI 20197073
(43) Date of publication of application: 16.03.2022
(73) Proprietor: Beamex Oy Ab, 68600 Pietarsaari (FI)
(72) Inventor: AUTIOSALO, Juuso, 00076 Aalto (FI); KUOSMANEN, Petri, 00076 Aalto (FI); MUSTAPÄÄ, Tuukka, 00076 Aalto (FI); NIKANDER, Pekka, 00076 Aalto (FI)
(74) Representative: Berggren Oy
(86) International application number: PCT/FI2020/050312
(87) International publication number: WO 2020/225488

(56) References cited:
- WO-A1-2021/168981
- WO-A2-2018/104890
- US-A1- 2014 025 944
- US-A1- 2014 025 944
- US-A1- 2014 298 044
- US-A1- 2019 113 492
- FAKHRY IRFAN ASFY ET AL: "Blockchain-Based for Calibration of Digital Multimeter System Design", 2018 INTERNATIONAL CONFERENCE ON ICT FOR SMART SOCIETY (ICISS), IEEE, 10 October 2018 (2018-10-10), pages 1 - 6, XP033459197, DOI: 10.1109/ICTSS.2018.8549924
- HACKEL SIEGFRIED GUSTAV ET AL: "The Digital Calibration Certificate", 1 January 2018 (2018-01-01), XP093008609, Retrieved from the Internet <URL:https://oar.ptb.de/files/download/5a9803864c91840b9b2a3ce5> [retrieved on 20221215], DOI: 10.7795/310.20170403
- "Electronic Signatures and Infrastructures (ESI); Scoping study and framework for standardization of long-term data preservation services, including preservation of/with digital signatures", vol. ESI, no. V1.1.1, 5 May 2017 (2017-05-05), pages 1 - 57, XP014290920, Retrieved from the Internet <URL:http://www.etsi.org/deliver/etsi_sr/019500_019599/019510/01.01.01_60/sr_019510v010101p.pdf> [retrieved on 20170505]
- "General testing procedures for medical electrical equipment", 25 September 2014 (2014-09-25), pages 1 - 213, XP082039575, Retrieved from the Internet <URL:https://api.iec.ch/harmonized/publications/download/81392> [retrieved on 20140925]
- HACKEL, SG ET AL.: "The Digital Calibration Certificate", PTB-MITTEILUNGEN, vol. 127, no. 4, 2017, pages 75 - 81, XP055605393, Retrieved from the Internet <URL:https://oar.ptb.de/resources/show/10.7795/310.20170403> [retrieved on 20200721], DOI: 10.7795/310.20170403

## Description

### FIELD OF THE INVENTION

The invention relates to measuring devices and specifically to the certification of a measurement result of a measuring device.

### STATE OF THE ART

With accelerating digitalization and automatization the need for new solutions to improve reliable and wide access to digital measurement data is great. At present the calibration certificates of measuring devices are either paper documents or PDF (portable document format) documents which are electronic, but in content equivalent to the paper documents, and which are not machine-understandable. Essentially the only benefit they provide to the user of the measuring device is documenting the verification of the accuracy of the measuring device relative to a national measurement standard. The added value provided by the existing analogue certificates has up to the present been almost exclusively that of quality control.

WO 2021/168981 discloses credible alliance blockchain digital calibration certificate system and operation method therefor. The system comprises a distributed ledger system of a distributed storage system, a CA system for managing all entity identity certificates, a UTC time calibration server, and a digital calibration certificate subsystem generating a digital calibration certificate, extracting related entity information and forming original information of a group of data blocks.

WO 2018/104890 discloses methods and entities, in particular of a transactional nature, using secure devices. It relates to a secure entity, a trusted execution hardware environment (TEE) comprising a secure processing circuit and suitable for implementing a contract-execution architecture, such as a Wallet Node for executing a contract-type program, wherein said program can be loaded into an execution memory in response to a program identifier contained in a message that reaches the entity via a channel for communication with other entities, and a secure device for interaction with the physical environment of the entity, such as a sensor and/or actuator module, which can supply input data for the execution of the contract and/or receive data generated by the execution of the contract, the secure device containing its own secret key for securing exchanges within the framework of the execution of the program.

US 2014/025944 discloses secure storage and signature. An integrated circuit device comprises a processor and a secure protection zone with security properties that can be verified by a remote device communicating with the integrated circuit device. The secure protection zone includes a persistent storage that is configured for storing cryptographic keys and data. The secure protection zone also includes instructions that are configured for causing the processor to perform cryptographic operations using the cryptographic keys. In addition, the secure protection zone includes an ephemeral memory that is configured for storing information associated with the cryptographic operations. The instructions are configured for causing the processor to perform the cryptographic operations on the data stored in the persistent storage and the information in the ephemeral memory as part of a secure communication exchange with the remote device.

Fakhry et al.: "Blockchain-based for Calibration of Digital Multimeter System Design", IEEE publication, 10 October 2018, discloses a design of a blockchain-based calibration digital multimeter system for alternative calibration digital multimeter system. The architecture system and the blockchain model used for calibration, are designed. This system ensures that calibration data for each instrument can't be hacked unilaterally, because of the distributed system involving the blockchain system design.

Hackel et al.: "The Digital Calibration Certificate", 1 January 2018, discloses structural design matters of a digital calibration certificate, also concerning encryption matters, mostly based on a German regulatory starting point.

"Electronic Signatures and Infrastructures (ESI); Scoping study and framework for standardization of long-term data preservation services, including preservation of/with digital signatures", ETSI Special Report 019 510, v.1.1.1, 5 May 2017, discloses an overview of preservation mechanisms which can be used to preserve the validity status of digital signatures or to preserve objects using digital signature techniques. It may be used to support all kinds of preservation services including qualified preservation service for qualified electronic signatures and for qualified preservation service for qualified electronic seals.

"General testing procedures for medical electrical equipment", International Electrotechnical Commission Technical Report 62354, 25 September 2014, discloses guidance on general testing procedures concerning medical electrical equipment.

Currently there is no digital calibration certificate in which strong and secure authentication would be combined in a way proving that the calibration information belongs with certainty to a specific measuring device.

### SUMMARY OF THE INVENTION

According to a first aspect of the present invention, a data security module is disclosed. The data security module comprises a key storage which is configured to store a cryptographic key in a protected manner, such that said cryptographic key is usable internally in the data security module without being accessible from outside of the data security module. The data security module further comprises a signing function which is configured to perform digital signing using the cryptographic key stored in the key storage. The data security module further comprises a certificate storage which is configured to store at least a part of a digital calibration certificate associated with a measuring device associated with the data security module, such that the at least part of the digital calibration certificate is accessible from outside of the data security module. The cryptographic key stored in the key storage is a secret key of a public key cryptography key pair associated with the measuring device, and the at least part of the digital calibration certificate stored in the certificate storage is associated with a public key corresponding to the secret key.

In an embodiment of the invention, the data security module further comprises a physically unclonable function (PUF) for generating the secret key during runtime.

In an embodiment of the invention, the data security module further comprises a real-time clock.

In an embodiment of the invention, the data security module further comprises a communication function for external communication of the data security module.

In an embodiment of the invention, the protection of the key storage is implemented on a hardware level.

In an embodiment of the invention, the signing function is implemented at least partly on a hardware level.

In an embodiment of the invention, the at least part of the digital calibration certificate stored in the certificate storage comprises the public key.

In an embodiment of the invention, the at least part of the digital calibration certificate stored in the certificate storage comprises identity information associated with the public key.

According to a second aspect of the present invention, a measuring device arranged in connection with the data security module according to the first aspect of the invention is disclosed. The measuring device comprises a measuring instrument, at least one processor, and at least one memory which comprises computer program code. The at least one memory and the computer program code are configured with the at least one processor to cause the measuring device to:
take under processing a measurement result produced using the measuring instrument;
associate a digital calibration certificate associated with a public key corresponding to a secret key stored in a key storage of the data security module with the measurement result taken under processing; and
digitally sign the associated measurement result using a signing function of the data security module and the secret key stored in the key storage.

In an embodiment of the invention, the at least one memory and the computer program code are further configured with the at least one processor to cause the measuring device to perform the association of the digital calibration certificate with the measurement result taken under processing by generating a hash of the digital calibration certificate and by including the generated hash in the measurement result taken under processing.

In an embodiment of the invention, the at least one memory and the computer program code are further configured with the at least one processor to cause the measuring device to generate a hash of the signed measurement result and store the generated hash in a blockchain.

In an embodiment of the invention, the data security module comprises a real-time clock and the at least one memory and the computer program code are further configured with the at least one processor to cause the measuring device to generate a timestamp for the signed measurement result using the real-time clock.

In an embodiment of the invention, the at least one memory and the computer program code are further configured with the at least one processor to cause the measuring device to generate a timestamp for the signed measurement result using eIDAS (Electronic Identification, Authentication and Trust Services).

In an embodiment of the invention, the at least one memory and the computer program code are further configured with the at least one processor to cause the measuring device to protect communication with an external third party.

According to a third aspect of the present invention, a method of certification of a measurement result of a measuring device is disclosed. The method comprises the steps of:
taking under processing, by the measuring device, a measurement result produced using the measuring device;
associating, by the measuring device, a digital calibration certificate with the measurement result taken under processing, the digital calibration certificate associated with a public key corresponding to a secret key stored in a key storage of the data security module according to the first aspect of the invention configured in connection with the measuring device; and
digitally signing, by the measuring device, the associated measurement result using a signing function of the data security module and the secret key stored in the key storage.

In an embodiment of the invention, the association of the digital calibration certificate with the measurement result taken under processing is performed by generating a hash of the digital calibration certificate and by including the generated hash in the measurement result taken under processing.

In an embodiment of the invention, the method further comprises generating, by the measuring device, a hash of the signed measurement result and storing, by the measuring device, the generated hash in a blockchain.

In an embodiment of the invention, the data security module comprises a real-time clock and the method further comprises generating, by the measuring device, a timestamp for the signed measurement result using the real-time clock.

In an embodiment of the invention, the method further comprises generating, by the measuring device, a timestamp for the signed measurement result using eIDAS (Electronic Identification, Authentication and Trust Services) .

According to a fourth aspect of the present invention, a computer program product is disclosed, which computer program product comprises at least one computer-readable storage medium which comprises a set of instructions which, when executed by one or more processors, cause a measuring device to perform the method according to the third aspect of the invention.

With the solution according to the invention the manufacturers of devices producing measurement results may easily and cost-efficiently attach to their products a functionality by means of which the devices automatically sign the produced measurement results using a digital calibration certificate defined for the device during or after manufacture as a certificate of signing of the measurement results. At least some of the solutions according to the invention enable the signing of measurement results to be performed in a way enabling the measurement results to be offered for purchasing by other organizations in a data market.

Replacing conventional calibration certificates with digital calibration certificates provides the advantage of improving the quality and reusability of measurement data, as digital certificates enable the accuracy, measurement conditions and authenticity of the data to be certified. Because it has so far been problematic to certify the Internet of Things (IoT) based IOT data, and because there is no clear solution for it, the use of digital calibration certificates as the certificates also significantly improves the quality of data of IoT systems processing measurement data and the reliability of the results obtained.

At least some of the solutions according to the invention are useful e.g. for measuring device and IoT device manufacturers, because they enable the device manufacturers to quickly and easily implement new standards and because they enable the implementation of necessary technology already before completion of the standard, such that devices existing in the market already may easily be updated according to the standard. Further, at least some of the solutions according to the invention are useful for device owners, because by means of the solutions the device owners may quickly and easily introduce the data produced by the device into a data market.

### LIST OF FIGURES

Below the invention will be described by means of the following examples of its embodiments with reference to the accompanying drawing, in which
Fig. 1 is a schematic illustration of a system according to the invention;
Fig. 2A is a block diagram of a data security module according to the invention;
Fig. 2B is a block diagram of a measuring device according to the invention;
Fig. 2C is a block diagram of another measuring device according to the invention;
Fig. 3A is a flow diagram of a method according to the invention; and
Fig. 3B is a flow diagram of another method according to the invention.

The same reference numbers are used throughout the accompanying drawing to refer to the corresponding elements.

### DETAILED DESCRIPTION OF THE INVENTION

Below is a detailed description of embodiments of the present invention, examples of which are illustrated in the accompanying drawings. The following detailed description together with the accompanying drawing are intended to illustrate the examples, and are not intended to represent the only forms in which the presented examples may be implemented or utilized. In the following, example functions and sequences of steps/operations for combining and using the examples will be disclosed. However, the same or equivalent functions and steps/operations may also be accomplished with other examples.

The advantage of digital calibration certificates is their machine-processability. This enables the utilization of the information contained by the certificates in other automatized systems. In addition, by means of digital calibration certificates the measurement data produced by measuring devices can be better protected by using the calibration certificate as a certificate of the digital signatures used for protecting the measurement data, which helps to solve problems in the verification of authenticity, integrity, measurement accuracy and other reliability of the data.

The signing of accuracy, integrity, reliability and authenticity of data enables a broad data market to be formed, as the users of measuring devices may sell the signed data for use by other organizations. Such situations may encompass e.g. the selling of anonymized car outdoor temperature data and position information for the providers of weather services. According to studies, by the mere reuse of data and analytics within one company, an improvement of 3-7% in productivity may be achieved. When data may be reliably combined from many different sources and over company boundaries, at a general estimate on average a corresponding and in the best case a multiple improvement in productivity may be achieved.

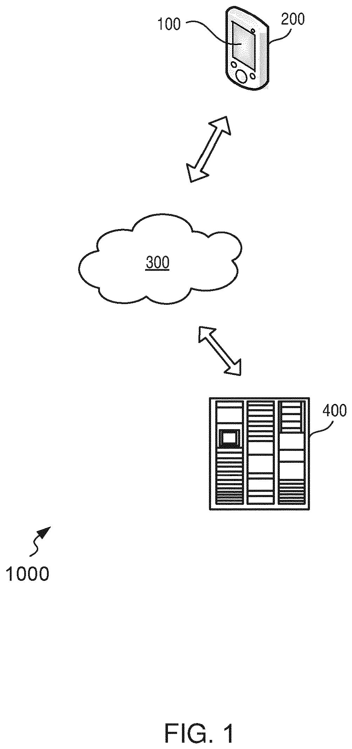

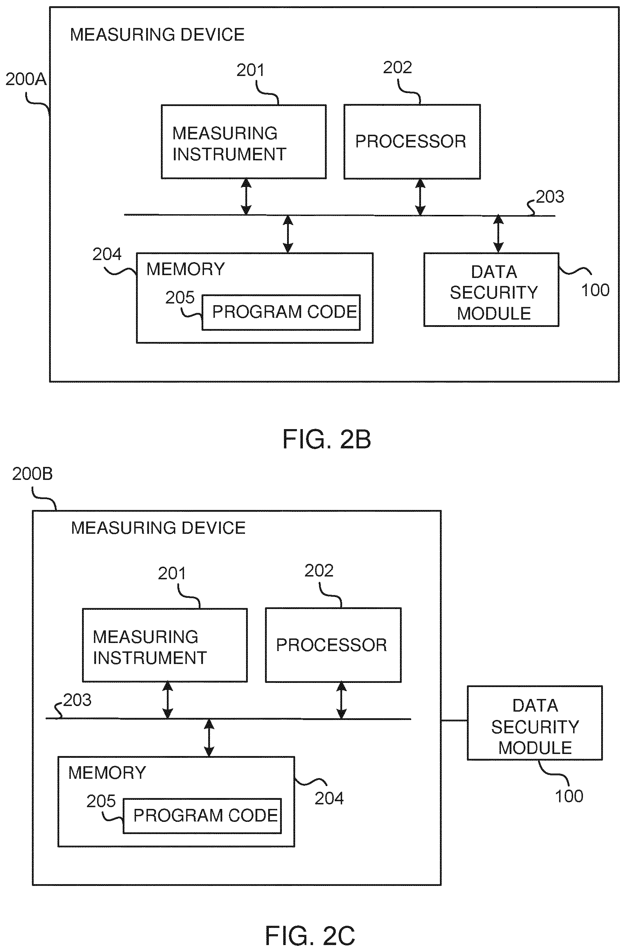

Fig. 1 illustrates, by way of example, components of a system 1000 according to the invention, in which system 1000 various embodiments of the present invention may be implemented. In the example of Fig. 1 there is illustrated a measuring device 200, in connection with which a data security module 100 according to the invention is arranged. In the example of Fig. 1 the measuring device 200 is in communication connection (by wireless and/or wired means) with a communications network 300 (such as the Internet), and thereby with one or more third party apparatuses 400 which are also connected to the communications network 300. Examples of the third party 400 include an eIDAS (Electronic Identification, Authentication and Trust Services) provider, a real-time clock synchronization server, providers of measurement data related services, providers of data markets, other users of measuring devices etc. The arrangement illustrated in Fig. 1 enables the certification of a measurement result of the measuring device 200 and forwarding of the certified measurement result further for various applications, as will be explained in more detail below. The measuring device 200 illustrated in Fig. 1 corresponds to the measuring device 200A illustrated in Fig. 2B and to the measuring device 200B illustrated in Fig. 2C.

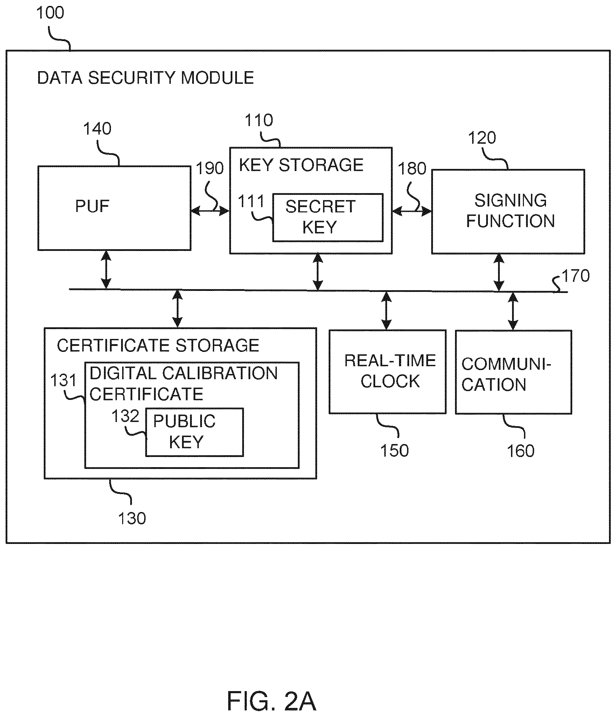

Fig. 2A is a block diagram of a data security module 100 according to the invention.

The data security module 100 described below may, for example, be implemented as a data security module which includes hardware and/or software and which may be provided as part of the measuring device 200A producing measurement results or connected between the measuring device 200B producing measurement results and the communications network 300. The data security module 100 may also be implemented as a software module provided as part of the software of the measuring device 200A producing measurement results such that it utilizes a hardware-level data security module existing in the measuring device 200A (not illustrated in Fig. 2B), for example a so-called trusted execution environment which is integrated in a processor 202 of the measuring device 200A and which may be for example SGX from Intel or TrustZone from ARM. The data security module 100 may also be implemented as a software component without a hardware-level data security module, if the measuring device 200A in which the data security module 100 is incorporated is as a whole considered sufficiently secure, for example because the hardware is fully sealed. This may be the situation for example if the measuring device 200A is itself able to detect the breakage of the seal and store information on the breakage of the seal such that the information may not be deleted.

An embodiment of the data security module 100 may be a dedicated, integrated and/or packaged microcircuit which may be designed such that it is easily integratable as part of the measuring device 200A producing measurement results. The microcircuit according to this embodiment may include one or more of the subcomponents described below, implemented by way of hardware. The microcircuit may be implemented by technology preventing the cryptographic keys and/or other information stored thereon from being read and/or exposed (so-called tamper proof technology).

In an embodiment, the various components of the data security module 100, such as a key storage 110, a signing function 120, a certificate storage 130, a PUF 140, a real-time clock 150 and/or a communication function 160 are configured to communicate with each other via or by means of a communication connection 170, such as a bus. In an embodiment, between the signing function 120 and the key storage 110 there is arranged a direct communication connection 180 separate from the communication connection 170. In an embodiment, between the PUF 140 and the key storage 110 there is arranged a direct communication connection 190 separate from the communication connection 170.

In an embodiment, the data security module 100 may also comprise a processor and/or a memory (not illustrated in Fig. 2A). This arrangement may be advantageous for example in the example of Fig. 2C in which the data security module 100 is implemented as an external module with respect to the measuring device 200B.

The data security module 100 comprises a key storage 110 which is configured to store a cryptographic key in a protected manner, i.e. such that said cryptographic key is usable internally in the data security module 100 without being accessible from outside of the data security module 100 (in other words, such that said cryptographic key cannot be for example read, copied or forwarded from/to outside of the data security module 100). In an embodiment of the invention, this protection of the key storage 110 is implemented on a hardware level.

The data security module 100 further comprises a signing function 120 which is configured to perform digital signing using the cryptographic key stored in the key storage 110. In an embodiment of the invention, the signing function 120 is implemented at least partly on a hardware level. In an embodiment, the direct communication connection 180 separate from the bus 170, arranged between the signing function 120 and the key storage 110, enables the signing function 120 to use a secret key 111 (for example read the contents of the secret key 111). In this embodiment, the secret key 111 cannot be read via the communication connection 170.

The data security module 100 further comprises a certificate storage 130 which is configured to store at least a part of a digital calibration certificate (DCC) 131 associated with the measuring device 200A, 200B (described in more detail below in connection with Fig. 2B-2C) associated with the data security module 100 such that this at least part of the digital calibration certificate 131 is accessible from outside of the data security module 100 (in other words, such that this at least part of the digital calibration certificate 131 can be for example read, copied and/or forwarded from/to outside of the data security module 100).

In an example the certificate storage 130 may require that when the certificate 131 is being updated, the new certificate version must be a newer version of the certificate which is already stored in the storage 130. This may be implemented for example such that the storage 130 requires that the new certificate includes a cryptographic or other hash of the old certificate, and that the new certificate is signed with at least a same key as the certificate stored in the storage 130.

The cryptographic key stored in the key storage 110 is the secret key 111 of a public key cryptography key pair of associated with the measuring device 200A, 200B, and the at least part of the digital calibration certificate 131 stored in the certificate storage 130 is associated with a public key 132 corresponding to the secret key 111. In an embodiment of the invention, the feature that the at least part of the digital calibration certificate 131 stored in the certificate storage 130 is associated with the public key 132 corresponding to the secret key 111 comprises that the at least part of the digital calibration certificate 131 stored in the certificate storage 130 comprises this public key 132. In another embodiment of the invention, the feature that the at least part of the digital calibration certificate 131 stored in the certificate storage 130 is associated with the public key 132 corresponding to the secret key 111 comprises that the at least part of the digital calibration certificate 131 stored in the certificate storage 130 comprises identity information associated with this public key 132. The public key 132 may be accessed by means of the identity information associated with the public key 132.

In an embodiment of the invention, the data security module 100 further comprises a PUF (physical unclonable function or physically unclonable function) 140 for generating the secret key 111 during runtime. Thereby the secret key 111 may be produced in a secure manner (for example when the data security module 100 and/or the measuring device 200A starts up) without having to permanently store the secret key 111 in the data security module 100. In an embodiment, the direct communication connection 190 separate from the bus 170, which is arranged between the PUF 140 and the key storage 110, enables the PUF 140 to write the secret key 111 in the key storage 110. In this embodiment, the secret key 111 cannot be written via the communication connection 170. In another embodiment there is no communication connection 190, but data security is arranged such that the PUF 140 does not disclose the generated secret key 111 except once (for example when the secret key 111 is written in the key storage 110 after start-up).

In an embodiment of the invention, the data security module 100 further comprises a real-time clock 150. The real-time clock 150 may, for example, be used for attaching a timestamp to the measurement results, which timestamp may be part of the information which is certified by signing.

In an embodiment of the invention, the data security module 100 further comprises a communication function 160 for external communication of the data security module. By means of the communication function 160 the data security module 100 may for example communicate with the outside world and for example verify that the real-time clock 150 of the data security module 100 runs in universal time. The communication function 160 may be protected from other software and hardware of the data security module 100 and/or the measuring device 200A such that the data security module 100 may verify that the communication is with an external service, for example an Internet-based service, the identity and for example a cryptographic identifier of which may be stored in the data security module 100, for example in the certificate storage 130 when this cryptographic identifier is a public key or in the key storage 110 when this cryptographic identifier is a secret key.

In this text the term "storage" refers to a memory which is used for a specific purpose and to which functions have been linked. In an example, the key storage 110 is thereby a memory which is located in the data security module 100 and to which it is possible to write (for changing a key) but which cannot be read. The reading of the memory 110 has been prevented at a hardware level, for example such that there are no circuits needed for reading in the hardware. The signing function (for example a separate logic circuit) 120 is linked to the memory 110, to which signing function a processor using the data security module 100 (such as the processor 202 in the example of Fig. 2B or the external data security module's 100 own processor in the example of Fig. 2C) may input, i.e. write, a document to be signed (i.e. for example a combination of a measurement result and the digital calibration certificate 131 or a hash of the calibration certificate 131) and from which signing function it may after some time read the digital signature corresponding to the document in question.

Fig. 2B is a block diagram of a measuring device 200A according to the invention.

The measuring device 200A is arranged in connection with the data security module 100. In the example of Fig. 2B this means that the data security module 100 is integrated as a part of the measuring device 200A. The data security module 100 may, for example, be a microcircuit or another hardware-based implementation. Alternatively, the data security module 100 may be implemented as a part of the software of the measuring device 200A. Alternatively, the data security module 100 may be implemented as partly hardware and partly software. In an example, the measuring device 200A comprises an IoT (Internet of Things) measuring device.

The measuring device 200A comprises a measuring instrument 201 (such as a sensor or the like), at least one processor 202, and at least one memory 204 which comprises computer program code 205.

Although the measuring device 200A of Fig. 2B is illustrated as comprising only one processor 202, the measuring device 200A may comprise a plurality of processors. In an embodiment, the computer program code 205 may comprise instructions 205 (e.g. an operating system and/or various applications). In addition, stored instructions may be executed by the processor 202. In an embodiment, the processor 202 may be embodied as a multi-core processor, a single-core processor, or a combination of one or more multi-core processors and one or more single-core processors. The processor 202 may, for example, be embodied as one or more of various processing devices, such as a coprocessor, a microprocessor, a controller, a DSP (digital signal processor), a processing circuitry with or without a DSP, or various other processing devices including an ASIC (application specific integrated circuit), an FPGA circuit (field programmable gate array), a microcontroller unit, a hardware accelerator, or the like. In an embodiment, the processor 202 may be configured to execute a hardcoded functionality. In an embodiment, the processor 202 is embodied as an executor of software instructions, wherein the processor 202 may be configured with the instructions to execute the algorithms and/or operations described in this disclosure when the instructions are executed.

The memory 204 may be embodied as one or more volatile memory devices, one or more non-volatile memory devices, and/or a combination of one or more volatile memory devices and one or more non-volatile memory devices. The memory 204 may, for example, be embodied as a semiconductor memory such as, for example, a PROM (programmable ROM), an EPROM (erasable PROM), a flash ROM, a RAM (random access memory) etc.

In an embodiment, various components of the measuring device 200A, such as the measuring instrument 201, the processor 202, the memory 204, and/or the data security module 100 are configured to communicate with each other via or by means of a communication connection 203, such as a bus. The communication connection 203 may be arranged for example on a printed circuit board, such as a mother board or the like.

The measuring device 200A illustrated and described herein is only an example of a device which may utilize the embodiments of the invention, and it is not intended to limit the scope of protection of the invention. It is to note that the measuring device 200A may comprise more or fewer components than what is illustrated in Fig. 2. The measuring device 200A may be distributed into several different physical entities communicating with each other by means of a suitable communication connection.

The at least one memory 204 and the computer program code 205 are configured with the at least one processor 202 to cause the measuring device 200A to take under processing a measurement result produced using the measuring instrument 201.

The at least one memory 204 and the computer program code 205 are further configured with the at least one processor 202 to cause the measuring device 200A to associate the digital calibration certificate 131 associated with the public key 132 corresponding to the secret key 111 stored in the key storage 110 of the data security module 100 with the measurement result taken under processing. In an example embodiment of the invention, the at least one memory 204 and the computer program code 205 are configured with the at least one processor 202 to cause the measuring device 200A to perform this association of the digital calibration certificate 131 with the measurement result taken under processing by generating a hash of the digital calibration certificate 131 and by including the generated hash in the measurement result taken under processing. In an example embodiment, in addition to and/or instead of a hash of the digital calibration certificate 131, a suitable identifier of the calibration certificate 131 may be included in the measurement result taken under processing.

A simplified example of presenting the measurement result in an XML (extensible markup language) code is:
<measurement-result>...</measurement-result>

Then the same XML code for the measurement result is for example as follows when the calibration certificate is associated with it:

```
          <measurement-result-with-associated-calibra-
                   tion-certificate>
          <measurement-result>...</measurement-result>
              <associated-calibration-certificate>
          <calibration-certificate-identifier>...</cal-
            ibration-certificate-identifier>
                <calibration-certificate-finger-
    print>...</calibration-certificate-fingerprint>
              </associated-calibration-certificate>
          </measurement-result-with-associated-calibra-
                   tion-certificate>
```

In this example an identifier and a digital hash of the calibration certificate are attached to / included in the measurement result.

The at least one memory 204 and the computer program code 205 are further configured with the at least one processor 202 to cause the measuring device 200A to digitally sign the associated measurement result using the signing function of the data security module 100and the secret key 111 stored in the key storage 110.

Continuing the example presented above, the XML code for the measurement result is for example as follows after signing:

```
                   <signed-measurement-result>
          <measurement-result-with-associated-calibra-
                   tion-certificate>
          <measurement-result>...</measurement-result>
              <associated-calibration-certificate>
          <calibration-certificate-identifier>...</cal-
            ibration-certificate-identifier>
                <calibration-certificate-finger-
    print>...</calibration-certificate-fingerprint>
              </associated-calibration-certificate>
          </measurement-result-with-associated-calibra-
                   tion-certificate>
           <digital-signature>...</digital-signature>
                  </signed-measurement-result>
```

In an embodiment of the invention, the at least one memory 204 and the computer program code 205 are further configured with the at least one processor 202 to cause the measuring device 200A to generate a hash of the signed measurement result and store the generated hash in a blockchain. The blockchain used may be for example ethereum or hyperledger fabric. Storing the generated hash of the signed measurement result in a blockchain provides for example the advantage of indicating that the measurement result was at the latest created when storing in the blockchain was performed, because the blockchain cannot be changed afterwards. In other words, by using a blockchain a so-called notarized timestamp may be provided.

In an embodiment of the invention, the data security module 100 comprises a real-time clock 150 and the at least one memory 204 and the computer program code 205 are further configured with the at least one processor 202 to cause the measuring device 200A to generate a timestamp for the signed measurement result using the real-time clock 150. The timestamp produced using the real-time clock 150 may be used, for example, as an alternative for a timestamp produced using a blockchain.

In an embodiment of the invention, the at least one memory 204 and the computer program code 205 are further configured with the at least one processor 202 to cause the measuring device 200A to generate a timestamp for the signed measurement result using eIDAS (Electronic Identification, Authentication and Trust Services). eIDAS is a regulation of the European Union (EU) on electronic trust services including e.g. an electronic timestamp which is a timestamp attached to an electronic signature and which certifies the time of signing, or at least the time before which the signing was performed, if timestamping is made afterwards.

By means of the data security module 100 the measuring device 200A, 200B containing or otherwise being linked to the module may be strongly identified, using for example the secret key 111 corresponding to the public key 132 stored in the certificate storage 130 or the secret key produced using the PUF 140 for the signing of suitable identification information. The identification information may be for example produced by the measuring device 200A or the data security module 100 or it may form part of an identification protocol in which the identification information or part of it is obtained from outside of the measuring device 200A by means of a communication connection.

By means of the data security module 100 the measurement results produced by the measuring device 200A, 200B may for example be signed in such a way that the user of the measurement results may, for example: a) check which measuring device has produced the results, b) at which time (date and time) the results have been produced and/or signed, c) that the results have not been changed after the measuring device 200A has signed them, d) what calibration certificate 131 has been stored in the measuring device 200A, 200B when the results were signed, e) what was or were the current measurement uncertainty or uncertainties on the basis of the calibration certificate 131 when the measurement was performed and/or signed. This type of signing together with the calibration certificate 131 may indicate which measuring device has produced the measurement results, in which units the measurement result is presented, and what is the measurement accuracy of the result.

In an embodiment of the invention the at least one memory 204 and the computer program code 205 are further configured with the at least one processor 202 to cause the measuring device 200A to protect communication with an external third party. By means of the data security module 100 the measurement results may for example be protected from external observers, for example by using a cryptographically protected connection between the data security module 100 and an external server and/or by using a cryptographic key which may be protected using the key storage 110 in a way that enables trusted third parties to access the measurement results but prevents the access of others to their content. This function may protect different parts of the measurement results, such as only numerical values, in addition to the numerical values also other information, or for example all information of the measurement results including the signatures. This function may be implemented using for example public or secret key cryptographic methods.

The data security module 100 may be provided such that it is directly integrated into a digital business platform, which enables the connection of an IoT measuring device to an open network and the selling of data in a data market. This may mean, for example, that the measurements signed with the data security module 100 are protected such that they may only be utilized by a licensed party or parties and that at least the licensed parties may verify the authenticity of the signature.

An example of the digital business platform is a business platform, i.e. a marketplace by means of which the businesses providing measurement results may offer for utilization and third parties may utilize the generated measurement data and/or respective metadata, such as place and time, and for example information on the measurement calibration of the device, such as measurement accuracy, measurement unit and the performer of the calibration.

An advantageous embodiment of the invention may include a data security module implemented as a microcircuit, and a combination of so-called cloud services, one or more blockchains and one or more distributed databases. In this embodiment, the cloud services, block chain(s) and database or databases form a technical platform on which the above-mentioned digital business platform is implemented.

Such microcircuit implementation may be based on a so-called SoC (system on chip) technology in which on the same semiconductor chip several different hardware functions are integrated to enable the storage and execution of software utilizing them, and/or a so-called SiP (system in package) technology in which in the same package there are several semiconductor chips coupled partly to each other and partly to the outside world.

The distributed database used or a plurality of such databases may be implemented with a so-called distributed ledger technology (DLT). The DLT used may be for example Hyperledger Indy or Corda R3. The blockchain or DLT used may include a so-called smart contract function.

Combining the blockchains and databases implemented with DLT in the system into a technical platform and/or to implement the digital business platform may be based on so-called interledger methods. The interledger methods may be fully or partly based on so-called HTLA (hashed time lock agreement) protocols and/or algorithms. Such HTLA or other interledger method may be based on a component or function implemented with the above-described microcircuit. Such function may for example be reliable measurement of time (e.g. the real-time clock 150), an accelerator of a cryptographic function (e.g. the signing function 120) and/or a secure cryptographic key storage and use function (e.g. the key storage 110 and/or the certificate storage 130).

One or some of the distributed databases or blockchains used may be integrated and partly (or fully) implemented with a microcircuit. Such microcircuit implementation may be implemented partly (or fully) as a hardware, i.e. semiconductor implementation. Such hardware implementation may include an accelerator suitable for implementing a so-called proof of work (PoW) or other corresponding (proof of stake, proof of elapsed time, etc.) method. The accelerator may be for example hardware implementation of the digital hash function. The hash function used may be for example SHA-256 or another digital hash function generally used in interledger or distributed database implementations.

Fig. 2C is a block diagram of another measuring device 200B according to the invention. In the example of Fig. 2B, the feature that the measuring device 200B is arranged in connection with the data security module 100 means that the data security module 100 is implemented as an external module with respect to the measuring device 200B and connected to the measuring device 200B in such a way that the data security module 100 and the measuring device 200B are able to communicate with each other. In other features the measuring device 200B corresponds to the measuring device 200A of Fig. 2B and therefore the measuring instrument 201, the processor 202, the memory 204, the computer program code 205, their operation and interaction with the data security module 100 are not described again in this connection.

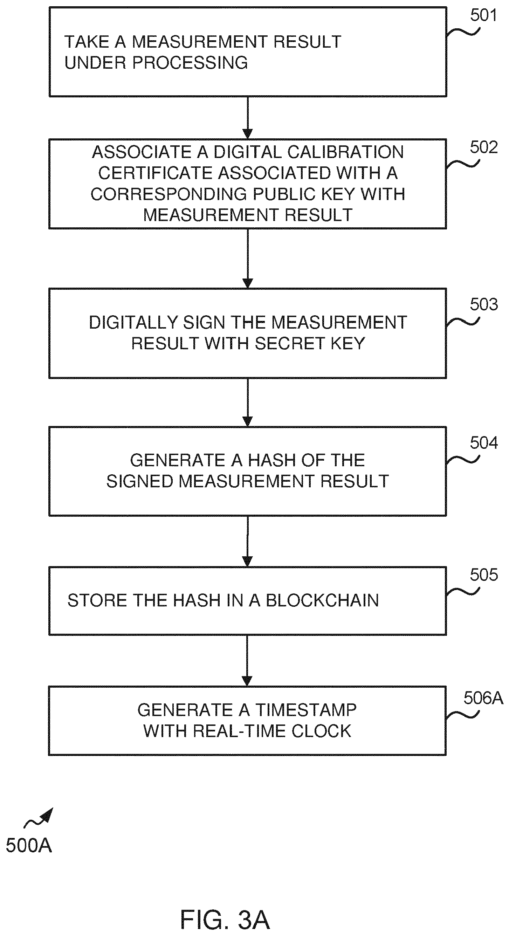

Fig. 3A presents an example flow diagram of a method 500A for certification of a measurement result of the measuring device 200A, 200B.

Operation 501 comprises taking under processing, by the measuring device 200A, 200B, a measurement result produced using the measuring device 200A, 200B.

Operation 502 comprises associating, by the measuring device 200A, 200B, the digital calibration certificate 131 with the measurement result taken under processing, the digital calibration certificate associated with the public key 132 corresponding to the secret key 111 stored in the key storage 110 of the data security module 100 arranged in connection with the measuring device 200A, 200B.

Operation 503 comprises digitally signing, by the measuring device 200A, 200B, the associated measurement result using the signing function 120 of the data security module 100 and the secret key 111 stored in the key storage 110.

Optional operation 504 comprises generating, by the measuring device 200A, 200B, a hash of the signed measurement result, and operation 505 comprises storing, by the measuring device 200A, 200B, the generated hash in a blockchain.

Optional operation 506A comprises generating, by the measuring device 200A, 200B, a timestamp for the signed measurement result using the real-time clock 150.

The method 500A may be performed by the measuring devices 200A, 200B of Fig. 2B, 2C. The additional features of the method 500A result directly from the functions and parameters of the devices 200A, 200B, and are therefore not repeated here. The method 500A may be performed by one or more computer programs. The operations of the method 500A may be performed in an order differing from that presented in the example of Fig. 3A. For example, operation 506A of generating a timestamp may alternatively be performed for example before operation 503 of digital signing.

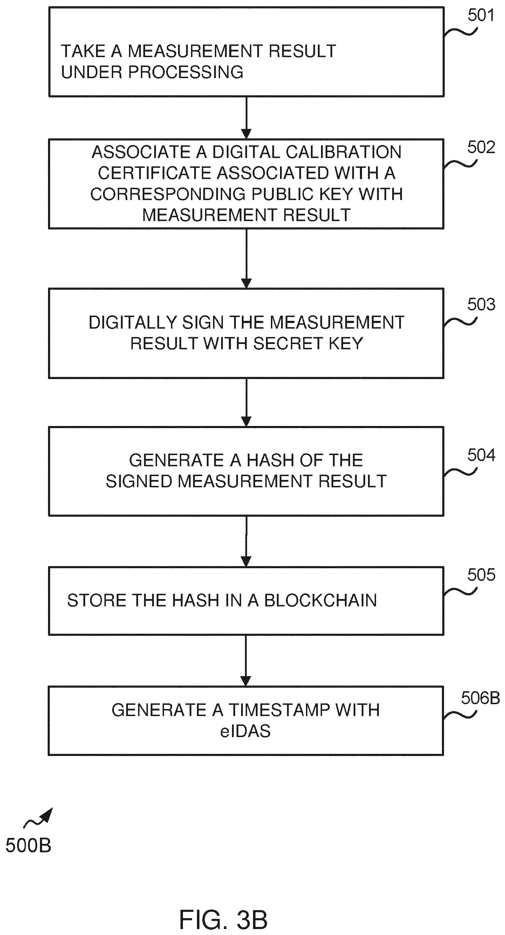

Fig. 3B presents an example flow diagram of a method 500B for certification of a measurement result of the measuring device 200A, 200B.

The method 500B comprises optional operation 506B of generating, by the measuring device, a timestamp for the signed measurement result using eIDAS (Electronic Identification, Authentication and Trust Services). In other features the method 500B corresponds to the method 500A of Fig. 3A and therefore operations 501-505 are not described again in this connection.

The method 500B may be performed by the measuring devices 200A, 200B of Fig. 2B, 2C. The additional features of the method 500B result directly from the functions and parameters of the devices 200A, 200B, and are therefore not repeated here. The method 500B may be performed by one or more computer programs. The operations of the method 500B may be performed in an order differing from that presented in the example of Fig. 3B. For example, operation 506B of generating a timestamp may alternatively be performed for example before operation 503 of digital signing.

The example embodiments may include, for example, any suitable measuring devices and equivalent devices capable of performing the processes of the example embodiments. The devices and subsystems of the example embodiments may communicate with each other using any suitable protocol and may be implemented using one or more programmed measuring systems or devices.

One or more interface mechanisms may be used with the example embodiments, including for example Internet connection, telecommunication in any suitable form (e.g. voice, modem, etc.), wireless communication media, and the like. The communication networks or connections used may include for example one or more satellite communication networks, wireless communication networks, cellular communication networks, 3G communication networks, 4G communication networks, 5G communication networks, public switched telephone network, packet data networks, Internet, intranet networks, a combination of some of them etc.

It is to be understood that the example embodiments are examples only, because many modifications of the specific hardware used for implementing the example embodiments are possible, as will be appreciated by persons skilled in the art. For example, the functionality of one or more components of the example embodiments may be implemented by way of hardware and/or software.

The example embodiments may store information related to the different processes described in this disclosure. Such information may be stored in one or more memories such as, for example, a hard disk, an optical disk, a magneto-optical disk, a RAM, etc. The information used for implementing the example embodiments of the present invention may be stored in one or more databases. The databases may be organized using data structures (e.g. records, arrays, tables, fields, graphs, trees, lists, etc.) included in one or more of the memories or storage devices listed herein. The processes described for the example embodiments may include the relevant data structures for storing the data collected and/or generated by the processes of the devices and subsystems of the example embodiments in one or more databases.

The example embodiments may be implemented fully or partly using one or more general-purpose processors, microprocessors, DSPs, microcontrollers, etc., which are programmed according to the teachings of the example embodiments of the present invention, as persons skilled in the art would understand. The average programmer may easily produce the relevant software on the basis of the teachings of the example embodiments, as persons skilled in the software arts would understand. In addition, the example embodiments may be implemented with application-specific integrated circuits or by combining a relevant network of traditional component circuits, as is understood by persons skilled in the electronic arts. Thus, the example embodiments are not limited to any specific combination of hardware and/or software.

Stored on any computer-readable medium or their combination, the example embodiments of the present invention may comprise software for controlling the components of the example embodiments, running the components of the example embodiments, enabling interaction of the components of the example embodiments with a human user etc. This type of software may include, but is not limited to, device drivers, firmware, operating systems, software development tools, application software, etc. The computer-readable media may further include the computer program product according to an embodiment of the present invention for executing the processes to be performed to implement the invention fully or partly (if the processing is distributed). The computer code devices of the example embodiments of the present invention may include any suitable interpretable or executable code mechanisms, including but not limited to scripts, interpretable programs, dynamic link libraries, Java classes and applets, fully executable programs etc. In addition, parts of the processing of the example embodiments of the present invention may be distributed to improve performance, reliability, costs etc.

As stated above, the components of the example embodiments may include a computer-readable medium or memory for storing the instructions programmed according to the teachings of the present invention and for storing the data structures, arrays, records and/or other data described in this disclosure. The computer-readable medium may comprise any suitable medium which participates in arranging instructions for being executed by a processor. This type of medium may take many different forms, including but not limited to a non-volatile or non-transitory storage medium, a volatile or transitory storage medium, etc. A non-volatile storage medium may comprise for example optical or magnetic disks, etc. A volatile storage medium may comprise for example dynamic memories etc. General forms of the computer-readable medium may include for example a floppy disk, a hard disk or any other suitable medium from which a computer may read.

The invention is not limited only to the above-described examples of its embodiments; instead, many modifications are possible within the scope of the inventive idea defined by the claims.

## Claims

1. A data security module (100), comprising:
a key storage (110), configured to store a cryptographic key in a protected manner, such that said cryptographic key is usable internally in the data security module (100) without being accessible from outside of the data security module (100); and
a signing function (120), configured to perform digital signing using the cryptographic key stored in the key storage (110),
**characterized in that** the data security module (100) is applied for verifying identity of a measuring device (200A, 200B) and measurement accuracy of a measurement result obtained by the measuring device (200A, 200B) via a digital calibration certificate (131), the data security module (100) further comprises:
a certificate storage (130), configured to store at least a part of the digital calibration certificate (131) associated with the measuring device (200A, 200B) associated with the data security module (100), such that said at least part of the digital calibration certificate (131) is accessible from outside of the data security module (100),
wherein the cryptographic key stored in the key storage (110) is a secret key (111) of a public key cryptography key pair associated with said measuring device (200A, 200B), and the at least part of the digital calibration certificate (131) stored in the certificate storage (130) is associated with a public key (132) corresponding to said secret key (111), so that
the measurements signed with the data security module (100) are protected such that they may only be utilized by a licensed party or parties.

2. The data security module (100) according to claim 1, further comprising:
a PUF (physically unclonable function) (140) for generating said secret key (111) during runtime.

3. The data security module (100) according to claim 1 or 2, further comprising:
a real-time clock (150).

4. The data security module (100) according to any one of claims 1-3, further comprising:
a communication function (160) for external communication of the data security module (100).

5. The data security module (100) according to any one of claims 1-4, wherein the protection of the key storage (110) is implemented on a hardware level.

6. The data security module (100) according to any one of claims 1-5, wherein the signing function (120) is implemented at least partly on a hardware level.

7. The data security module (100) according to any one of claims 1-6, wherein the at least part of the digital calibration certificate (131) stored in the certificate storage (130) comprises said public key (132).

8. The data security module (100) according to any one of claims 1-6, wherein the at least part of the digital calibration certificate (131) stored in the certificate storage (130) comprises identity information associated with said public key (132).

9. A system comprising the data security module (100) of any claim 1-8 and a measuring device (200A, 200B) arranged in connection with said data security module (100) and comprising:
a measuring instrument (201);
at least one processor (202); and
at least one memory (204) comprising computer program code (205), **characterized in that** the at least one memory (204) and the computer program code (205) are configured to, with the at least one processor (202), cause the measuring device (200A, 200B) to:
take under processing a measurement result produced using the measuring instrument (201);
associate a digital calibration certificate (131) associated with a public key (132) corresponding to a secret key (111) stored in a key storage (110) of the data security module (100) with the measurement result taken under processing; and
digitally sign the associated measurement result using a signing function (120) of the data security module (100) and the secret key (111) stored in the key storage (110).

10. The system according to claim 9 wherein the at least one memory (204) and the computer program code (205) of the measuring device (200A, 200B) are further configured with the at least one processor (202) to cause the measuring device (200A, 200B) to:
perform the association of the digital calibration certificate (131) with the measurement result taken under processing by generating a hash of the digital calibration certificate (131) and by including the generated hash in the measurement result taken under processing.

11. The system according to claim 9 or 10 wherein the at least one memory (204) and the computer program code (205) of the measuring device (200A, 200B) are further configured with the at least one processor (202) to cause the measuring device (200A, 200B) to:
generate a hash of the signed measurement result; and
store the generated hash in a blockchain.

12. The system according to claims 9 to 11 wherein the data security module (100) of the measuring device (200A, 200B) comprises a real-time clock (150) and the at least one memory (204) and the computer program code (205) are further configured with the at least one processor (202) to cause the measuring device (200A, 200B) to:
generate a timestamp for the signed measurement result using the real-time clock (150).

13. The system according to claims 9 to 11 wherein the at least one memory (204) and the computer program code (205) of the measuring device (200A, 200B) are further configured with the at least one processor (202) to cause the measuring device (200A, 200B) to:
generate a timestamp for the signed measurement result using eIDAS (Electronic Identification, Authentication and Trust Services).

14. The system according to claims 9-13 wherein the at least one memory (204) and the computer program code (205) of the measuring device (200A, 200B) are further configured with the at least one processor (202) to cause the measuring device (200A, 200B) to:
protect communication with an external third party.

15. A method (500A, 500B) of certification of a measurement performed by the system of claim 9, **characterized in that** the method (500A, 500B) comprises steps of:
taking (501) under processing, by the measuring device, a measurement result produced using the measuring device;
associating (502), by the measuring device, a digital calibration certificate with the measurement result taken under processing, the digital calibration certificate associated with a public key corresponding to a secret key stored in a key storage of the data security module according to any one of claims 1-8 arranged in connection with the measuring device; and
digitally signing (503), by the measuring device, the associated measurement result using a signing function of the data security module and the secret key stored in the key storage.

16. A computer program product comprising at least one computer-readable storage medium which comprises a set of instructions which, when executed by one or more processors (202), cause the system of claim 9 to perform the method according to claim 15.

## Patentansprüche

1. Datensicherheitsmodul (100), umfassend:
einen Schlüsselspeicher (110), der konfiguriert ist, um einen kryptographischen Schlüssel in einer geschützten Weise zu speichern, sodass der kryptographische Schlüssel intern in dem Datensicherheitsmodul (100) verwendet werden kann, ohne von außerhalb des Datensicherheitsmoduls (100) erreichbar zu sein; und
eine Unterzeichnungsfunktion (120), die konfiguriert ist, um eine digitale Unterzeichnung unter Verwendung des in dem Schlüsselspeicher (110) gespeicherten kryptographischen Schlüssels durchzuführen,
**dadurch gekennzeichnet, dass** das Datensicherheitsmodul (100) zur Überprüfung der Identität einer Messvorrichtung (200A, 200B) und der Messgenauigkeit eines von der Messvorrichtung (200A, 200B) erhaltenen Messergebnisses über ein digitales Kalibrierungszertifikat (131) eingesetzt wird, wobei das Datensicherheitsmodul (100) ferner Folgendes umfasst:
einen Zertifikatsspeicher (130), der konfiguriert ist, um mindestens einen Teil des digitalen Kalibrierungszertifikats (131) zu speichern, das der Messvorrichtung (200A, 200B) zugeordnet ist, die mit dem Datensicherheitsmodul (100) verbunden ist, sodass der mindestens eine Teil des digitalen Kalibrierungszertifikats (131) von außerhalb des Datensicherheitsmoduls (100) zugänglich ist,
wobei der in dem Schlüsselspeicher (110) gespeicherte kryptographische Schlüssel ein geheimer Schlüssel (111) eines Kryptographieschlüsselpaares mit öffentlichem Schlüssel ist, das mit der Messvorrichtung (200A, 200B) verbunden ist, und der mindestens ein Teil des in dem Zertifikatspeicher (130) gespeicherten digitalen Kalibrierungszertifikats (131) mit einem öffentlichen Schlüssel (132) verbunden ist, der dem geheimen Schlüssel (111) entspricht, sodass
die mit dem Datensicherheitsmodul (100) signierten Messungen so geschützt sind, dass sie nur von einer oder mehreren zugelassenen Parteien verwendet werden können.

2. Datensicherheitsmodul (100) nach Anspruch 1, ferner umfassend:
eine PUF (physisch nicht klonierbare Funktion) (140) zum Erzeugen des geheimen Schlüssels (111) während der Laufzeit.

3. Datensicherheitsmodul (100) nach Anspruch 1 oder 2, ferner umfassend:
eine Echtzeituhr (150).

4. Datensicherheitsmodul (100) nach einem der Ansprüche 1 bis 3, ferner umfassend:
eine Kommunikationsfunktion (160) für die externe Kommunikation des Datensicherheitsmoduls (100).

5. Datensicherheitsmodul (100) nach einem der Ansprüche 1 bis 4, wobei der Schutz des Schlüsselspeichers (110) auf einer Hardwareebene implementiert ist.

6. Datensicherheitsmodul (100) nach einem der Ansprüche 1 bis 5, wobei die Signierfunktion (120) mindestens teilweise auf einer Hardwareebene implementiert ist.

7. Datensicherheitsmodul (100) nach einem der Ansprüche 1 bis 6, wobei mindestens ein Teil des im Zertifikatspeicher (130) gespeicherten digitalen Kalibrierungszertifikats (131) den öffentlichen Schlüssel (132) umfasst.

8. Datensicherheitsmodul (100) nach einem der Ansprüche 1 bis 6, wobei mindestens ein Teil des im Zertifikatspeicher (130) gespeicherten digitalen Kalibrierungszertifikats (131) Identitätsinformationen umfasst, die mit dem öffentlichen Schlüssel (132) verbunden sind.

9. System, umfassend das Datensicherheitsmodul (100) nach einem der Ansprüche 1 bis 8 und eine Messvorrichtung (200A, 200B), die in Verbindung mit dem Datensicherheitsmodul (100) angeordnet ist und umfassend:
ein Messinstrument (201);
mindestens einen Prozessor (202); und
mindestens einen Speicher (204), umfassend einen Computerprogrammcode (205), **dadurch gekennzeichnet, dass** der mindestens eine Speicher (204) und der Computerprogrammcode (205) konfiguriert sind, um mit dem mindestens einen Prozessor (202) die Messvorrichtung (200A, 200B) zu veranlassen zum:
Verarbeiten eines mit dem Messinstrument (201) ermittelten Messergebnisses;
Zuordnen eines digitalen Kalibrierungszertifikats (131), das mit einem öffentlichen Schlüssel (132) verbunden ist, der einem geheimen Schlüssel (111) entspricht, der in einem Schlüsselspeicher (110) des Datensicherheitsmoduls (100) gespeichert ist, zu dem unter Verarbeitung genommenen Messergebnis; und
digitales Signieren des zugehörigen Messergebnisses mit einer Signierfunktion (120) des Datensicherheitsmoduls (100) und dem im Schlüsselspeicher (110) gespeicherten geheimen Schlüssel (111).

10. System nach Anspruch 9, wobei der mindestens eine Speicher (204) und der Computerprogrammcode (205) der Messvorrichtung (200A, 200B) ferner mit dem mindestens einen Prozessor (202) konfiguriert sind, um die Messvorrichtung (200A, 200B) zu veranlassen zum:
Durchführen der Zuordnung des digitalen Kalibrierungszertifikats (131) zum verarbeiteten Messergebnis durch Erzeugen eines Hashes des digitalen Kalibrierungszertifikats (131) und durch Einschließen des erzeugten Hashes in das verarbeitete Messergebnis.

11. System nach Anspruch 9 oder 10, wobei der mindestens eine Speicher (204) und der Computerprogrammcode (205) der Messvorrichtung (200A, 200B) ferner mit dem mindestens einen Prozessor (202) konfiguriert sind, um die Messvorrichtung (200A, 200B) zu veranlassen, einen Hash des signierten Messergebnisses zu erzeugen; und den erzeugten Hash in einer Blockchain zu speichern.

12. System nach einem der Ansprüche 9 bis 11, wobei das Datensicherheitsmodul (100) der Messvorrichtung (200A, 200B) eine Echtzeituhr (150) umfasst und der mindestens eine Speicher (204) und der Computerprogrammcode (205) ferner mit dem mindestens einen Prozessor (202) konfiguriert sind, um die Messvorrichtung (200A, 200B) zu veranlassen zum:
Erzeugen eines Zeitstempels für das signierte Messergebnis unter Verwendung der Echtzeituhr (150).

13. System nach einem der Ansprüche 9 bis 11, wobei der mindestens eine Speicher (204) und der Computerprogrammcode (205) der Messvorrichtung (200A, 200B) ferner mit dem mindestens einen Prozessor (202) konfiguriert sind, um die Messvorrichtung (200A, 200B) zu veranlassen zum:
Erzeugen eines Zeitstempels für das signierte Messergebnis unter Verwendung von eIDAS (elektronische Identifizierung, Authentifizierung und Vertrauensdienste).

14. System nach einem der Ansprüche 9 bis 13, wobei der mindestens eine Speicher (204) und der Computerprogrammcode (205) der Messvorrichtung (200A, 200B) ferner mit dem mindestens einen Prozessor (202) konfiguriert sind, um die Messvorrichtung (200A, 200B) zu veranlassen zum:
Schützen der Kommunikation mit einem externen Dritten.

15. Verfahren (500A, 500B) zur Zertifizierung einer durch das System nach Anspruch 9 durchgeführten Messung, **dadurch gekennzeichnet, dass** das Verfahren (500A, 500B) die folgenden Schritte umfasst:
Entnehmen (501) eines mit der Messvorrichtung erzeugten Messergebnisses unter Verarbeitung durch die Messvorrichtung;
Verknüpfen (502) eines digitalen Kalibrierungszertifikats mit dem in der Verarbeitung befindlichen Messergebnis durch die Messvorrichtung, wobei das digitale Kalibrierungszertifikat einem öffentlichen Schlüssel zugeordnet ist, der einem geheimen Schlüssel entspricht, der in einem Schlüsselspeicher des Datensicherheitsmoduls nach einem der Ansprüche 1 bis 8 gespeichert ist, der in Verbindung mit der Messvorrichtung angeordnet ist; und
digitales Signieren (503) des zugehörigen Messergebnisses durch die Messvorrichtung unter Verwendung einer Signierfunktion des Datensicherheitsmoduls und des im Schlüsselspeicher gespeicherten geheimen Schlüssels.

16. Computerprogrammprodukt, umfassend mindestens ein computerlesbares Speichermedium, das einen Satz von Anweisungen umfasst, die, wenn sie von einem oder mehreren Prozessoren (202) ausgeführt werden, das System nach Anspruch 9 veranlassen, das Verfahren nach Anspruch 15 durchzuführen.

## Revendications

1. Module de sécurité des données (100), comprenant :
un stockage de clés (110), configuré pour stocker une clé de chiffrement de manière protégée, de telle sorte que ladite clé de chiffrement est utilisable en interne dans le module de sécurité des données (100) sans être accessible depuis l'extérieur du module de sécurité des données (100) ; et
une fonction de signature (120), configurée pour effectuer une signature numérique à l'aide de la clé de chiffrement stockée dans le stockage de clés (110), **caractérisé en ce que** le module de sécurité des données (100) est appliqué pour vérifier l'identité d'un dispositif de mesure (200A, 200B) et la précision de mesure d'un résultat de mesure obtenu par le dispositif de mesure (200A, 200B) par le biais d'un certificat d'étalonnage numérique (131) ; le module de sécurité des données (100) comprend en outre :
un stockage de certificats (130), configuré pour stocker au moins une partie du certificat d'étalonnage numérique (131) associé au dispositif de mesure (200A, 200B) associé au module de sécurité des données (100), de telle sorte que ladite au moins une partie du certificat d'étalonnage numérique (131) est accessible depuis l'extérieur du module de sécurité des données (100),
dans lequel la clé de chiffrement stockée dans le stockage de clés (110) est une clé secrète (111) d'une paire de clés de chiffrement à clé publique associée audit dispositif de mesure (200A, 200B), et l'au moins une partie du certificat d'étalonnage numérique (131) stockée dans le stockage de certificats (130) est associée à une clé publique (132) correspondant à ladite clé secrète (111), de sorte que
les mesures signées avec le module de sécurité des données (100) sont protégées de telle sorte qu'elles peuvent uniquement être utilisées par une ou des parties sous licence.

2. Module de sécurité des données (100) selon la revendication 1, comprenant en outre :
une PUF (fonction physiquement non clonable) (140) permettant de générer ladite clé secrète (111) pendant l'exécution.

3. Module de sécurité des données (100) selon la revendication 1 ou 2, comprenant en outre :
une horloge en temps réel (150).

4. Module de sécurité des données (100) selon l'une quelconque des revendications 1 à 3, comprenant en outre :
une fonction de communication (160) pour la communication externe du module de sécurité des données (100).

5. Module de sécurité des données (100) selon l'une quelconque des revendications 1 à 4, dans lequel la protection du stockage de clés (110) est implémentée à un niveau matériel.

6. Module de sécurité des données (100) selon l'une quelconque des revendications 1 à 5, dans lequel la fonction de signature (120) est implémentée au moins en partie à un niveau matériel.

7. Module de sécurité des données (100) selon l'une quelconque des revendications 1 à 6, dans lequel l'au moins une partie du certificat d'étalonnage numérique (131) stockée dans le stockage de certificats (130) comprend ladite clé publique (132).

8. Module de sécurité des données (100) selon l'une quelconque des revendications 1 à 6, dans lequel l'au moins une partie du certificat d'étalonnage numérique (131) stockée dans le stockage de certificats (130) comprend des informations d'identité associées à ladite clé publique (132).

9. Système comprenant le module de sécurité des données (100) selon l'une quelconque des revendications 1 à 8 et un dispositif de mesure (200A, 200B) associé audit module de sécurité des données (100) et comprenant :
un instrument de mesure (201) ;
au moins un processeur (202) ; et
au moins une mémoire (204) comprenant un code de programme informatique (205), **caractérisé en ce que** l'au moins une mémoire (204) et le code de programme informatique (205) sont configurés pour, avec l'au moins un processeur (202), amener le dispositif de mesure (200A, 200B) à :
mettre en cours de traitement un résultat de mesure produit à l'aide de l'instrument de mesure (201) ;
associer un certificat d'étalonnage numérique (131) associé à une clé publique (132) correspondant à une clé secrète (111) stockée dans un stockage de clés (110) du module de sécurité des données (100) au résultat de mesure mis en cours de traitement ; et
signer numériquement le résultat de mesure associé à l'aide d'une fonction de signature (120) du module de sécurité des données (100) et de la clé secrète (111) stockée dans le stockage de clés (110).

10. Système selon la revendication 9 dans lequel l'au moins une mémoire (204) et le code de programme informatique (205) du dispositif de mesure (200A, 200B) sont en outre configurés avec l'au moins un processeur (202) pour amener le dispositif de mesure (200A, 200B) à :
effectuer l'association du certificat d'étalonnage numérique (131) avec le résultat de mesure mis en cours de traitement en générant un hachage du certificat d'étalonnage numérique (131) et en incluant le hachage généré dans le résultat de mesure mis en cours de traitement.

11. Système selon la revendication 9 ou 10 dans lequel l'au moins une mémoire (204) et le code de programme informatique (205) du dispositif de mesure (200A, 200B) sont en outre configurés avec l'au moins un processeur (202) pour amener le dispositif de mesure (200A, 200B) à :
générer un hachage du résultat de mesure signé ; et stocker le hachage généré dans une chaîne de blocs.

12. Système selon les revendications 9 à 11 dans lequel le module de sécurité des données (100) du dispositif de mesure (200A, 200B) comprend une horloge en temps réel (150) et l'au moins une mémoire (204) et le code de programme informatique (205) sont en outre configurés avec l'au moins un processeur (202) pour amener le dispositif de mesure (200A, 200B) à :
générer un horodatage pour le résultat de mesure signé à l'aide de l'horloge en temps réel (150).

13. Système selon les revendications 9 à 11 dans lequel l'au moins une mémoire (204) et le code de programme informatique (205) du dispositif de mesure (200A, 200B) sont en outre configurés avec l'au moins un processeur (202) pour amener le dispositif de mesure (200A, 200B) à :
générer un horodatage pour le résultat de mesure signé à l'aide du règlement eIDAS (Services électroniques d'identification, d'authentification et de confiance).

14. Système selon les revendications 9 à 13 dans lequel l'au moins une mémoire (204) et le code de programme informatique (205) du dispositif de mesure (200A, 200B) sont en outre configurés avec l'au moins un processeur (202) pour amener le dispositif de mesure (200A, 200B) à :
protéger la communication avec un tiers externe.

15. Procédé (500A, 500B) de certification d'une mesure effectuée par le système selon la revendication 9, **caractérisé en ce que** le procédé (500A, 500B) comprend les étapes consistant à :
mettre (501) en cours de traitement, par le dispositif de mesure, un résultat de mesure produit à l'aide du dispositif de mesure ;
associer (502), par le dispositif de mesure, un certificat d'étalonnage numérique au résultat de mesure mis en cours de traitement, le certificat d'étalonnage numérique étant associé à une clé publique correspondant à une clé secrète stockée dans un stockage de clés du module de sécurité des données selon l'une quelconque des revendications 1 à 8 agencé en liaison avec le dispositif de mesure ; et
signer numériquement (503), par le dispositif de mesure, le résultat de mesure correspondant à l'aide d'une fonction de signature du module de sécurité des données et de la clé secrète stockée dans le stockage de clés.

16. Produit de programme informatique comprenant au moins un support de stockage lisible par ordinateur qui comprend un ensemble d'instructions qui, lorsqu'elles sont exécutées par un ou plusieurs processeurs (202), amènent le système selon la revendication 9 à effectuer le procédé selon la revendication 15.
